(19) Europäisches Patentamt
European Patent Office
Office européen des brevets

(11) Veröffentlichungsnummer: **0 164 308**
**A1**

# (12) EUROPÄISCHE PATENTANMELDUNG

(21) Anmeldenummer: **85810191.8**

(22) Anmeldetag: **29.04.85**

(51) Int. Cl.⁴: **C 07 F 9/44**, A 01 N 57/26

(30) Priorität: **04.05.84 CH 2189/84**
**21.12.84 CH 6097/84**
**22.02.85 CH 826/85**

(43) Veröffentlichungstag der Anmeldung: **11.12.85**
**Patentblatt 85/50**

(84) Benannte Vertragsstaaten: **AT BE CH DE FR GB IT LI NL SE**

(71) Anmelder: **CIBA-GEIGY AG, Postfach, CH-4002 Basel (CH)**

(72) Erfinder: **Kristiansen, Odd, Dr., Delligrabenstrasse 7, CH-4313 Möhlin (CH)**
Erfinder: **Drabek, Jozef, Dr., Benkenstrasse 12, CH-4104 Oberwil (CH)**

(54) **N-Formyl-dithiophosphonsäureamide.**

(57) N-Formyl-dithiophosphonsäureamide der Formel:

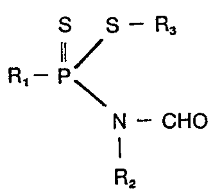

(I)

worin

$R_1$ Alkyl oder Phenyl,

$R_2$ Alkyl, Alkenyl oder Cycloalkyl, und

$R_3$ Alkyl bedeuten.

Es werden ein Verfahren zur Herstellung dieser Verbindungen und ihre Verwendung in der Schädlingsbekämpfung beschrieben.

CIBA-GEIGY AG 5-14859/1-3
Basel (Schweiz)

N-Formyl-dithiophosphonsäureamide

Die vorliegende Erfindung betrifft N-Formyl-dithiophosphonsäureamide, Verfahren zu ihrer Herstellung und ihre Verwendung in der Schädlingsbekämpfung.

Die N-Formyl-dithiophosphonsäureamide haben die Formel

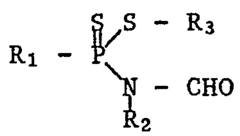

(I),

worin $R_1$ Alkyl oder Phenyl,
$R_2$ Alkyl, Alkenyl oder Cycloalkyl und
$R_3$ Alkyl bedeuten.

Die Alkyl- und Alkenylgruppen bei $R_1$, $R_2$ und $R_3$, können geradkettig oder verzweigt sein und haben in der Kette bevorzugt 1 bis 8 resp. 2 bis 6 Kohlenstoffatome. Beispiele solcher Gruppen sind u.a.: Methyl, Aethyl, Propyl, Isopropyl, n-Butyl, n-Pentyl, n-Hexyl, n-Heptyl sowie deren Isomere, Allyl, 3-Butenyl oder $-CH_2-CH_2-CH=CH-CH_3$.

Die Cycloalkylgruppen bei $R_2$ haben 3 bis 8 Kohlenstoffatome. Beispiele solcher Gruppen sind u.a.: Cyclopropyl, Cyclopentyl oder Cyclohexyl.

0164308

Bevorzugt sind Verbindungen der Formel I, worin
$R_1$ $C_1$-$C_8$-Alkyl oder Phenyl und
$R_2$ und $R_3$ unabhängig voneinander $C_1$-$C_8$-Alkyl bedeuten.

Insbesondere bevorzugt sind aber Verbindungen der Formel I, worin
$R_1$ Methyl oder Aethyl und
$R_2$ und $R_3$ unabhängig voneinander $C_1$-$C_4$-Alkyl bedeuten.

Die Verbindungen der Formel I können nach an sich bekannten Methoden z.B. wie folgt hergestellt werden:

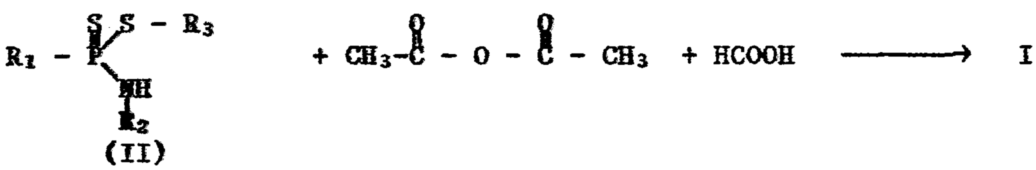

(II)

In der Formel II haben $R_1$, $R_2$ und $R_3$ die für die Formel I angegebene Bedeutung.

Das Verfahren wird bei einer Reaktionstemperatur zwischen -10° C und +100° C, vorzugsweise zwischen 0° C und 50° C, bei normalem oder leicht erhöhtem Druck vorgenommen.

Die Ausgangsstoffe der Formel II sind bekannt oder können nach bekannten Verfahren hergestellt werden.

Die Verbindungen der Formel I eignen sich zur Bekämpfung von verschiedenartigen Schädlingen an Tieren und Pflanzen sowie im Boden. So können sie zur Bekämpfung von Insekten, z.B. der Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera und von Milben und Zecken der Ordnung Acarina eingesetzt werden.

So eignen sich Verbindungen der Formel I zur Bekämpfung von pflanzenschädigenden Insekten in Zier- und Nutzpflanzen, insbesondere in Baumwollkulturen (z.B. Spodoptera littoralis und Heliothis virescens). Vor allem aber haben Verbindungen der Formel I eine günstige Wirkung gegen Bodeninsekten (z.B. Aulacophora femoralis, Chortophila brassicae, Diabrotica balteata, Pachnoda savignyi und Scotia ypsilon).

Wirkstoffe der Formel I zeigen auch eine sehr günstige Wirkung gegen Fliegen, wie z.B. Musca domestica und Mückenlarven. Ausserdem besitzen die Verbindungen der Formel I auch gute nematizide Eigenschaften.

Die akarizide bzw. insektizide Wirkung lässt sich durch Zusatz von anderen Insektiziden und/oder Akariziden wesentlich verbreitern und an gegebene Umstände anpassen. Als Zusätze eignen sich z.B. org. Phosphorverbindungen; Nitrophenole und deren Derivate; Formamidine; Harnstoffe; pyrethrinartige Verbindungen sowie Karbamate und chlorierte Kohlenwasserstoffe.

Die Verbindungen der Formel I wirken auch gegen phytopathogene Pilze. So wirken Verbindungen der Formel I gegen die den folgenden Klassen angehörenden phytopathogenen Pilze: Ascomycetes (z.B. Erysiphaceae, Fusarium, Helminthosporium): Basidiomycetes wie Puccinia, Rhizoctonia, Tilletia, Hemileia; Fungi imperfecti (z.B. Cercospora, Botrytis, Septoria); Phycomycetes wie Phytophthora.

Die Verbindungen der Formel I können vorteilhaft als Beizmittel zur Behandlung von Saatgut und Vorrat (Früchte, Knollen, Körner) und Pflanzenstecklingen und zur Saatfurchenapplikation zum Schutz vor Pilzinfektionen und Insekten sowie gegen die im Erdboden auftretenden phytopathogenen Pilzen und Insekten eingesetzt werden.

Mit besonderem Vorteil werden Verbindungen der Formel I auch mit Substanzen kombiniert, welche einen synergistischen oder verstärkenden Effekt ausüben. Beispiele solcher Verbindungen sind u.a. Piperonylbutoxid, Propinyläther, Propinyloxime, Propinylcarbamate und Propinylphosphonate, 2-(3,4-Methylendioxyphenoxy)-3,6,9-trioxaundecan (Sesamex resp. Sesoxane), S,S,S-Tributylphosphorotrithioate, 1,2-Methylendioxy-4-(2-(octylsulfinyl)-propyl)-benzol.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festem Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Essigester, Propylmyristat oder Propylpalmitat, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; Silikonöle oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Tallöl gewonnen werden können. Ferner sind auch die Fettsäuremethyltaurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes und Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5-Aethylenglykoleinheiten.

Als Beispiele nichtionischer Tenside seien Nonylphenolpolyäthoxyäthanole, Ricinusölpolyglycoläther, Ricinusölthioxilat, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22-C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:

> "McCutcheon's Detergents and Emulsifiers Annual" MC Publishing Corp., Ridgewood, New Jersey, 1979; Dr. Helmut Stache "Tensid Taschenbuch", Carl Hanser Verlag München/Wien 1981.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I
(% = Gewichtsprozent)

| 1. Emulsions-Konzentrate | a) | b) | c) |
|---|---|---|---|
| Wirkstoff der Formel I | 25 % | 40 % | 50 % |
| Ca-Dodecylbenzolsulfonat | 5 % | 8 % | 6 % |
| Ricinusöl-polyäthylenglykoläther (36 Mol AeO) | 5 % | - | - |
| Tributylphenol-polyäthylenglykoläther (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff der Formel I | 80 % | 10 % | 5 % | 95 % |
| Aethylenglykol-monomethyläther | 20 % | - | - | - |
| Polyäthylenglykol (MG 400) | - | 70 % | - | - |
| N-Methyl-2-pyrrolidon | - | 20 % | - | - |
| Epoxidiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 3. Granulate | a) | b) |
|---|---|---|
| Wirkstoff der Formel I | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff der Formel I | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für feste Wirkstoffe der Formel I (% = Gewichtsprozent)

| 5. Spritzpulver | a) | b) | c) |
|---|---|---|---|
| Wirkstoff der Formel I | 20 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol AeO) | - | 2 % | - |
| Hochdisperse Kieselsäure | 5 % | 10 % | 10 % |
| Kaolin | 67 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 6. Emulsions-Konzentrat | a) | b) |
|---|---|---|
| Wirkstoff der Formel I | 10 % | 10 % |
| Octylphenolpolyäthylenglykoläther (4-5 Mol AeO) | 3 % | - |
| Ca-Dodecylbenzolsulfonat | 3 % | - |
| Ricinusölpolyglykoläther (36 Mol AeO) | 4 % | - |
| Ricinusölthioxilat | - | 25 % |
| Cyclohexanon | 30 % | - |
| Butanol | - | 15 % |
| Xylolgemisch | 50 % | - |
| Essigester | - | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff der Formel I | 5 % | 8 % |
| Talkum | 95 % | - |
| Kaolin | - | 92 % |

Man erhält anwendungsfertige Stäubemittel, indem der Wirkstoff mit dem Träger vermischt und auf einer geeigneten Mühle vermahlen wird.

| 8. Extruder Granulat | |
|---|---|
| Wirkstoff der Formel I | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

9. Umhüllungs-Granulat

| | |
|---|---|
| Wirkstoff der Formel I | 3 % |
| Polyäthylenglykol (MG 200) | 3 % |
| Kaolin | 94 % |

Der feingemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

10. Suspensions-Konzentrat

| | |
|---|---|
| Wirkstoff der Formel I | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 1: Herstellung von N-Methyl-N-formyl-S-(sek.butyl)-äthandithiophosphonsäureamid

Ein Gemisch von 4,5 g Ameisensäure und 8 g Essigsäureanhydrid wird während 30 Minuten bei 20° C gerührt. Bei 5° C werden 11 g N-Methyl-S-(sek-butyl)-äthandithiophosphonsäureamid zugetropft. Nach 16stündigem Rühren bei 20° C wird das Reaktionsgemisch im Hochvakuum von Essigsäure befreit. Man erhält die Verbindung Nr. 1 der Formel

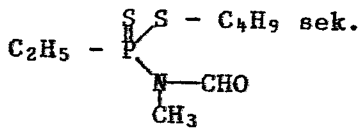

mit einer Refraktion von $n_D^{22°} = 1,5464$.

Auf analoge Weise werden auch folgende Verbindungen der Formel I hergestellt:

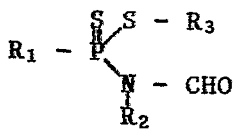

(I),

| Verbindung Nr. | $R_1$ | $R_2$ | $R_3$ | Physikalische Daten |
|---|---|---|---|---|
| 2 | $C_2H_5$ | $CH_3$ | $C_4H_{9(t)}$ | $n_D^{20°} = 1,5519$ |
| 3 | $CH_3$ | $C_2H_5$ | $C_4H_{9(t)}$ | Smp.: 63-65°C |
| 4 | $CH_3$ | $CH_3$ | $C_4H_{9(t)}$ | $n_D^{20°} = 1,5580$ |
| 5 | $CH_3$ | $C_2H_5$ | $C_4H_{9(s)}$ | $n_D^{20°} = 1,5452$ |
| 6 | $C_2H_5$ | $C_2H_5$ | $C_4H_{9(s)}$ | $n_D^{20°} = 1,5408$ |
| 7 | $CH_3$ | $CH_3$ | $C_4H_{9(s)}$ | $n_D^{20°} = 1,5523$ |
| 8 | $C_2H_5$ | $C_2H_5$ | $C_3H_{7(n)}$ | $n_D^{20°} = 1,5471$ |
| 9 | $C_2H_5$ | $-(CH_2)_7CH_3$ | $C_4H_{9(s)}$ | $n_D^{20°} = 1,5148$ |
| 10 | Phenyl | $C_2H_5$ | $C_4H_{9(s)}$ | $n_D^{20°} = 1,5909$ |
| 11 | Phenyl | $CH_3$ | $C_4H_{9(s)}$ | $n_D^{20°} = 1,5997$ |
| 12 | $CH_3$ | $CH_3$ | $C_5H_{11(i)}$ | $n_D^{20°} = 1,5433$ |
| 13 | $CH_3$ | $C_2H_5$ | $C_5H_{11(i)}$ | $n_D^{20°} = 1,5362$ |

Beispiel 2: Insektizide Frassgift-Wirkung: Spodoptera littoralis

Baumwollpflanzen werden mit einer Versuchslösung, enthaltend 400 ppm der zu prüfenden Verbindung, besprüht.

Nach dem Antrocknen des Belages werden die Pflanzen mit Larven von Spodoptera littoralis ($L_1$-Stadium) besetzt. Man verwendet pro Versuchsverbindung zwei Pflanzen. Die Auswertung der erzielten Abtötungsrate erfolgt nach 2, 4, 24, 48 und 72 Stunden. Der Versuch wird bei 28°C und 60 % relativer Luftfeuchtigkeit durchgeführt.

Verbindungen gemäss Beispiel 1 zeigen im obigen Test 80-100%ige Wirkung gegenüber Spodoptera littoralis-Larven.

Beispiel 3: Wirkung gegen Lucilia sericata

Zu 9 ml eines Zuchtmediums wird bei 50°C ein ml einer 0,1 % Aktivsubstanz enthaltenden wässrigen Zubereitung hinzugefügt. Nun werden ca. 30 frisch geschlüpfte Lucilia sericata-Larven zum Zuchtmedium gegeben. Nach 48 und 96 Stunden wird die insektizide Wirkung durch Ermittlung der Abtötungsrate festgestellt.

Verbindungen gemäss Beispiel 1 zeigen in diesem Test 80-100%ige Wirkung gegen Lucilia sericata.

Beispiel 4: Wirkung gegen Aëdes aegypti

Auf die Oberfläche von 150 ml Wasser, das sich in einem Behälter befindet, wird so viel einer 0,1 %igen acetonischen Lösung des Wirkstoffs pipettiert, dass eine Konzentration von 12,5 ppm erhalten wird. Nach Verdunsten des Acetons wird der Behälter mit 30 bis 40 2tägigen Aëdes-Larven beschickt. Nach 2 und 7 Tagen wird die % Mortalität (Anzahl der schwimmunfähigen Larven) geprüft.

Verbindungen gemäss Beispiel 1 zeigen 100%ige Wirkung (Mortalität) im obigen Test.

Beispiel 5: Ovizide Wirkung auf Heliothis virescens

Entsprechende Mengenanteile einer benetzbaren pulverförmigen Formulierung, enthaltend 25 Gew.% des zu prüfenden Wirkstoffes, werden mit jeweils so viel Wasser vermischt, dass sich wässrige Emulsionen mit Wirkstoffkonzentrationen von 400 bis 12,5 ppm ergeben.

In diese wirkstoffhaltigen Emulsionen werden eintägige Eigelege von Heliothis auf Cellophan® während drei Minuten eingetaucht und dann auf Rundfiltern abgenutscht. Die so behandelten Gelege werden in Petrischalen ausgelegt und in der Dunkelheit aufbewahrt. Nach 6 bis 8 Tagen wird die Schlupfrate im Vergleich zu unbehandelten Kontrollen festgelegt. Zur Auswertung wird die zur 100%igen Abtötung der Eier erforderliche Wirkstoffkonzentration bestimmt.

Verbindungen gemäss Beipiel 1 zeigen bei 12,5 ppm 100%ige Wirkung (Mortalität) in obigem Test.

Beispiel 6: Insektizide Kontaktwirkung: Myzus persicae

Etwa 4 cm hohe, in Wasser angezogene Erbsenkeimlinge werden vor Versuchsbeginn je mit ca. 200 Individuen der Spezies Myzus persicae besiedelt. Die so behandelten Pflanzen werden 24 Stunden später mit einer wässrigen Suspension enthaltend 400 ppm der zu prüfenden Verbindung bis zur Tropfnässe besprüht. Man verwendet pro Konzentration zwei Pflanzen. Eine Auswertung der erzielten Abtötungsrate erfolgt 48 Stunden nach Applikation. Der Versuch wird bei 20-22°C und 60 % relativer Luftfeuchtigkeit durchgeführt.

Verbindungen der Formel I gemäss Beispiel 1 zeigen in diesem Test eine 80-100%ige Wirkung.

Beispiel 7: Wirkung gegen Bodeninsekten (Diabrotica balteata)

Es werden 5 etwa einen bis drei cm lange Maiskeimlinge sowie eine Rondelle aus Filterpapier in eine 0,2 bis 12,5 ppm des zu prüfenden Wirkstoffes enthaltende wässrige Zubereitung getaucht. Die feuchte Filterpapierrondelle wird auf dem Boden eines 200 ml Plastik-bechers ausgelegt, und dann werden die 5 behandelten Maiskeimlinge zusammen mit 10 Larven von Diabrotica balteata des zweiten bis dritten Larvalstadiums in den Becher gegeben. Pro Wirkstoffkonzentration werden 2 Ansätze durchgeführt. Die mit den Larven besetzten Becher werden während 6 Tagen bei Tageslicht, einer relativen Luftfeuchtigkeit von 40 bis 60 % und einer Temperatur von 22 bis 24°C gehalten. Danach wird die prozentuale Abtötung der Testtiere bestimmt.

Verbindungen gemäss Beispiel 1 zeigen bei einer Wirkstoffkonzentration von 12,5 ppm in diesem Test 100%ige Wirkung.

Patentansprüche

1. Ein N-Formyl-dithiophosphonsäureamid der Formel

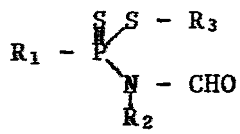

(I),

worin $R_1$ Alkyl oder Phenyl,

$R_2$ Alkyl, Alkenyl oder Cycloalkyl und

$R_3$ Alkyl bedeuten.

2. Eine Verbindung gemäss Anspruch 1
worin $R_1$ $C_1$-$C_8$-Alkyl oder Phenyl und
$R_2$ und $R_3$ unabhängig voneinander $C_1$-$C_8$-Alkyl bedeuten.

3. Eine Verbindung gemäss Anspruch 2,
worin $R_1$ Methyl oder Aethyl und
$R_2$ und $R_3$ unabhängig voneinander $C_1$-$C_4$-Alkyl bedeuten.

4. Die Verbindung gemäss Anspruch 3 der Formel

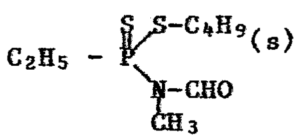

.

5. Die Verbindung gemäss Anspruch 3 der Formel

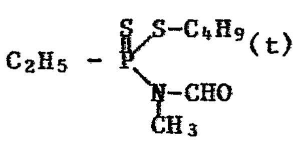

.

6. Die Verbindung gemäss Anspruch 3 der Formel

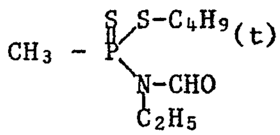 .

7. Die Verbindung gemäss Anspruch 3 der Formel

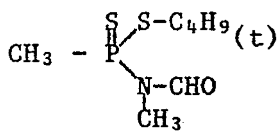 .

8. Die Verbindung gemäss Anspruch 3 der Formel

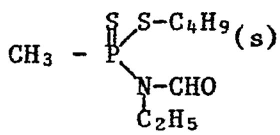 .

9. Die Verbindung gemäss Anspruch 3 der Formel

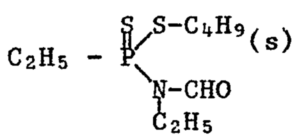 .

10. Die Verbindung gemäss Anspruch 3 der Formel

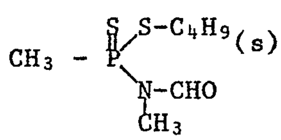 .

11. Die Verbindung gemäss Anspruch 3 der Formel

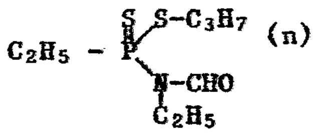

.

12. Die Verbindung gemäss Anspruch 2 der Formel

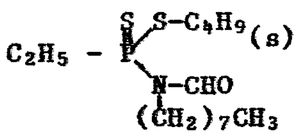

.

13. Die Verbindung gemäss Anspruch 2 der Formel

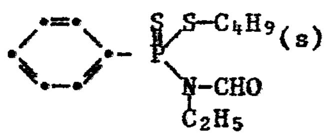

.

14. Die Verbindung gemäss Anspruch 2 der Formel

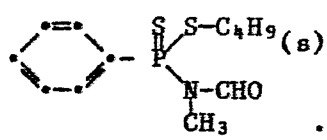

.

15. Die Verbindung gemäss Anspruch 2 der Formel

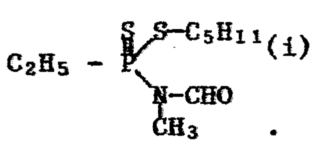

.

16. Die Verbindung gemäss Anspruch 2 der Formel

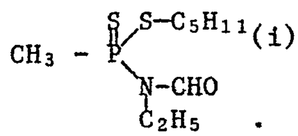

17. Ein Verfahren zur Herstellung von Verbindungen gemäss Anspruch 1, dadurch gekennzeichnet, dass man eine Verbindung der Formel

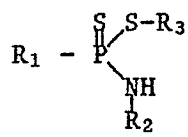

mit Essigsäureanhydrid und Ameisensäure umsetzt, worin $R_1$, $R_2$ und $R_3$ die im Anspruch 1 angegebene Bedeutung haben.

18. Ein Schädlingsbekämpfungsmittel, welches als aktive Komponente eine Verbindung gemäss Anspruch 1 und in der Formulierungstechnik übliche Hilfsmittel enthält.

19. Die Verwendung einer Verbindung gemäss Anspruch 1 zur Bekämpfung von verschiedenartigen Schädlingen an Tieren und Pflanzen sowie im Boden.

20. Die Verwendung gemäss Anspruch 19 zur Bekämpfung von Insekten und Vertretern der Ordnung Akarina.

21. Ein Verfahren zur Bekämpfung von verschiedenartigen Schädlingen an Tieren und Pflanzen sowie im Boden, dadurch gekennzeichnet, dass man eine Verbindunmg gemäss Anspruch 1 auf die Tiere und Pflanzen oder auf den Boden appliziert.

FO 7.5 WH/eg*sch*

Europäisches Patentamt

**EUROPÄISCHER RECHERCHENBERICHT**

0164308

Nummer der Anmeldung

EP 85 81 0191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 015 802 (STAUFFER CHEMICAL CO.)<br>* Seite 6, Zeile 24 - Seite 10, Zeile 24 *<br>--- | 1,18-21 | C 07 F 9/44<br>A 01 N 57/26 |
| Y | EP-A-0 001 053 (BAYER A.G.)<br>* Seite 20, Zeilen 1-12; Seite 2, Zeilen 4,5 *<br>--- | 1,18-21 | |
| Y | EP-A-0 068 823 (ROHM & HAAS CO.)<br>* Seite 3, Zeilen 10-17; Seiten 39-46 *<br>----- | 1,18-21 | |
| | | | RECHERCHIERTE SACHGEBIETE (Int. Cl.4) |
| | | | C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 06-08-1985 | BESLIER L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82